# EUROPEAN PATENT APPLICATION

(11) **EP 4 711 242 A1**
(43) Date of publication of application: **18.03.2026**
(21) Application number: 24200431.5
(22) Date of filing: 14.09.2024
(51) Int. Cl.: B62D 5/06, B62D 5/00, B62D 5/065

(54) **STEERING SYSTEM**

(71) Applicant: KB Intellectual Property GmbH & Co. KG, 82049 Pullach (DE)
(72) Inventor: GYURKO, Zoltán, 1047 Budapest (HU); NEMETH, Huba, 1116 Budapest (HU); STRAUB, Kornel, 2013 Pomáz (HU); TOTH, Zoltan, 1046 Budapest (HU); ENZSÖL, Ákos, 1117 Budapest (HU)

(57) **Abstract**

The present invention refers to a steering system (100) for a commercial vehicle comprising at least one road-wheel actuator for exerting a steering impulse on at least one road wheel of the vehicle, the at least one road-wheel actuator being configured as an assembly comprising at least one first module (110) comprising a hydraulic actuator, at least one second module (120) comprising a hydraulic pump and a valve block and at least one third module (130) comprising an electromotor and an electronic control unit, wherein the road-wheel actuator comprises an additional first module, second module and/or third module. Moreover, the present invention refers to a road-wheel actuator for such a steering system.

## Description

The present invention refers to a steering system, in particular a Steer-by-Wire system, and a corresponding road-wheel actuator, in particular a modular road-wheel actuator.

According to the prior art, steering systems like Steer-by-Wire systems are known for example from WO 2022/175120 A1 disclosing an electrohydraulic power steering system for a vehicle, comprising a hydraulic pump, a drive, a first working line, a second working line and a heat transfer unit.

However, in contrast to such know prior art, it may be necessary to provide some redundancy level or different power levels in accordance with the load or multiple steering axles as well as depending on the vehicle use.

WO 2021/1163243 A1 discloses a redundant steering system comprising a primary power source; a secondary power source; first and second pumps operatively coupled to the primary and secondary power sources, respectively, to output first and second supplies of hydraulic fluid to a steering cylinder based on operation of the primary and secondary power source, respectively; first and second pairs of selector valves respectively coupled to the first and second pumps; and a charge circuit coupled to respective control inputs of the first and second pairs of selector valves to selectively supply hydraulic fluid to the control inputs of the first and second pairs of selector valves to stop hydraulic fluid from only one of the first pump and the second pump from being provided to the steering cylinder and to provide hydraulic fluid to the steering cylinder from only one of the other of the first pump and the second pump.

WO 2004/005112 A1 discloses a hydraulic power-assisted steering system, comprising a steering gear and a hydraulic actuator for assisting actuation of the steering wheel by the driver of a vehicle, especially a motor vehicle, consisting of an electric motor which is coupled to the steering column and used as an additional torque actuator for actively applying an additional steering torque, also consisting of an electronic control and regulating unit which comprises a determination unit for determining a steering torque and an evaluation and selector circuit used to determine an overall value for the application of the additional steering torque, taking into account the determined steering torque or a variable derived therefrom and a selected steering characteristic. Said overall value for the application of the additional steering torque comprises a driver-dependent component and a driver-independent component.

WO 2015/003803 A1 discloses an electrohydraulic steering system, more particularly for mobile work machines, more particularly wheel loaders, having at least one controller comprising at least one hydraulic branch with at least one hydraulic primary circuit and at least one hydraulic secondary circuit, wherein the hydraulic primary circuit comprises at least one main valve for hydraulic actuation of the steering system, and wherein the hydraulic secondary circuit comprises at least one emergency valve for hydraulic actuation of the steering system in emergency mode, the emergency valve being smaller than the main valve.

EP3967573 A1 discloses a drive-by-wire electro-hydraulic steering system based on a double-winding motor and a hybrid control method. The steering system includes a steering wheel, a steering column assembly, a road sense assembly, an electro-hydraulic power-assisted module, a double-winding motor power-assisted module, a steering control unit, an electromagnetic clutch, a steering tie rod, a steering trapezoid and steering wheels. The steering system can be switched among various steering work modes according to work conditions of a vehicle, meets steering requirements under various work conditions, uses a work mode that two sets of windings of the double-winding motor work at the same time, and has a motor winding redundancy function. When one set of windings fails, the other set of windings can drive the motor to provide power-assisted torque.

EP1914150 A2 a steering system, in particular a steer-by-wire steering system, which includes a hydraulic circuit comprising a hydraulic pump, a reservoir, a bi-directional steering actuator, a pair of electronic control units for generating electrical steering control signals in response to an operator-generated steering command. There is a need for such a circuit which does not require large expensive valves. The hydraulic circuit includes a pair of solenoid operated directional control valve units and a pair of solenoid operated shut-off valves. Each directional control valve unit and a corresponding one of the shut-off valves are connected in series between the pump, the reservoir and the steering actuator, and are connected to a respective one of the ECUs and controlled thereby. In the absence of a fault condition both shut-off valves are open so that hydraulic flow to and from the actuator is shared by both the first and second directional control valve units.

However, each of the known systems only allows for certain redundant components and none of such systems is scalable to different demands of redundancy.

It is an object of the invention to provide an efficient and economical possibility to fulfill redundancy requirements, preferably with respect to safety and/or power level requirements. It is an further objective to provide a system which can be easily adapted to different requirements of redundancy or power level. Moreover, it is an object of the present invention to provide a correspondingly modular road-wheel actuator.

These objectives are resolved by system according to independent claim 1 and a road-wheel actuator according to independent claim 13. Preferred embodiments are addressed by the dependent claims respectively.

According to the present invention a steering system, in particular Steer-by-Wire system, for a commercial vehicle is provided, comprising at least one road-wheel actuator for exerting a steering impulse on at least one road wheel of the vehicle, the at least one road-wheel actuator being configured as a modular assembly comprising:
- at least one first module comprising a hydraulic actuator, e.g. a hydraulic cylinder or the like;
- at least one second module comprising a hydraulic pump and a valve block;
- at least one third module comprising an electromotor and an electronic control unit;
wherein the road-wheel actuator further comprises at least one additional first module, second module and/or third module.

The present invention is based on the idea to provide a modular design of the road-wheel actuator and thus of the overall steering system, wherein single components can be scaled, e.g. doubled or tripled, on demand.

Thus, in the context of the present invention, the steering system can be considered as a modular steering system.

In particular, by the present invention a redundancy of components for safety and/or reliability reasons can be provided as well as a power level of the steering system can be adapted and scaled according to individual needs of the respective application.

According to one preferred embodiment the road-wheel actuator comprises two third modules configured to increase the power of the steering system.

Hence, dependent on the individual needs of a specific (field of) application, the steering system, in particular the road-wheel actuator, can be provided with a specifically scaled power level in order to meet the corresponding requirements.

According to one preferred embodiment the road-wheel actuator comprises two or three third modules , configured to be used in dependence of a prerequisite condition to act as redundant module or to increase the power of the steering system. The system can be configured in such a way, that depending on the prerequisite condition the power of two or three third modules is added, or to have three redundant third modules.

According to one preferred embodiment the second module, in particular the electronic control unit comprises sensors, in order to allow and/or being necessary for steering of the at least one road wheel.

According to one preferred embodiment the road-wheel actuator comprises sensors, in order to allow and/or being necessary for steering of the at least one road wheel, wherein the sensors are arranged outside the second module.

According to another preferred embodiment the road-wheel actuator comprises only one third module, wherein the motor of the third module is provided as a double-wound motor. Such a double wound module allows to use each of the windings a separate motor, in particular for enhancing the power level.

In an embodiment with more than one third module, each of the motors may be configured as a redundant motor, preferably in form of a double-wound motor.

According to one preferred embodiment each of the electronic control units arranged in a respective third module are communicatively connected in order to communicate and/or cooperate with each other.

According to an alternative preferred embodiment each of the electronic control units arranged in a respective third module are communicatively connected forming a primary-secondary setup, also known as a "master-slave" setup, with each other.

According to one preferred embodiment one of the electronic control units is selectable as primary control unit for a predetermined first (time) period, whereby at the end of the first period a different control unit is selectable as primary for a predetermined second (time) period and/or wherein the selection of one of the electronic control units as a primary control unit preferably includes a non-failure test whereby
- in case of non-failure of the non-failure test, the electronic control unit is selected as primary, whereby,
- in case of failure of the non-failure test, the electronic control unit is not selected, and the non-failure test is performed on a different control unit.

According to one preferred embodiment each of the control units is configured to check its working status and to provide information about its working status to the other control unit(s).

Thus, if one of the control units communicates, that it has the primary function, the other control unit(s) can automatically switch to secondary modus.

If a control unit working as primary communicates a failure status, one of the other(s) takes over the primary function.

Preferably, a predetermined ranking inbetween the control units for taking over the primary role within the primary-secondary combination setup can be established. Thus, a discrete order of the control units can be ensured concerning the selection of a control unit as primary or secondary.

In another preferred embodiment, the system further comprises a steering wheel device configured to provide a user input signal to the at least one road-wheel actuator and at least one road wheel configured to be actuated by the at least one road-wheel actuator, in particular according to the user input signal.

In particular, the user input signal/command can be provided in form of turning the steering wheel device, whereby the rotation can be translated into and/or transmitted as a corresponding input signal/command to the further components, like the control unit, of the steering system, in particular the Steer-by-Wire system.

According to another aspect of the present invention a road-wheel actuator, in particular a modular road-wheel actuator, for a steering system according to one of the preceding claims is provided, wherein the road-wheel actuator comprises multiple modules of at least one of the first module, the second module and/or the third module.

Further details and advantages of the present invention are explained and described in more detail in the context of the embodiment as illustrated by the enclosed figures.

It is schematically shown:
- Fig. 1: an embodiment of a steering system, in particular of a modular Steer-by-Wire system;
- Fig. 2: another embodiment of a steering system, in particular of a modular Steer-by-Wire system with doubled motor unit;
- Fig. 3: another embodiment of a steering system, in particular of a modular Steer-by-Wire system with tripled Motor unit; and
- Fig.4: another embodiment of a steering system, in particular of a modular Steer-by-Wire system with all module components being doubled.

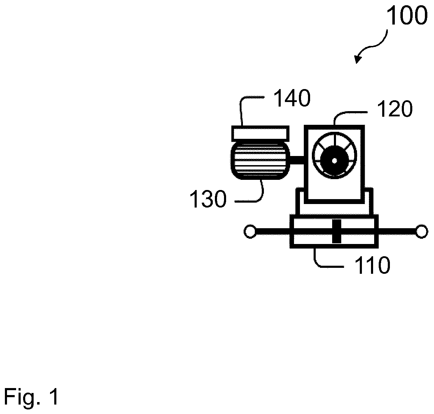

In Fig. 1 an embodiment of steering system 100, preferably a Steer-by-Wire system , is depicted, comprising a first module 110, a second module 120 and a third module 130.

The first module 110 comprises a hydraulic cylinder. The hydraulic cylinder is configured for actuating at least one road wheel.

The second module 120 comprises a hydraulic pump and valves. The second module is hydraulicly connected to the first module.

The third module 130 comprises an electric motor as well as an electronic control unit 140. The electric motor is connected with the second module in order to drive the hydraulic pump.

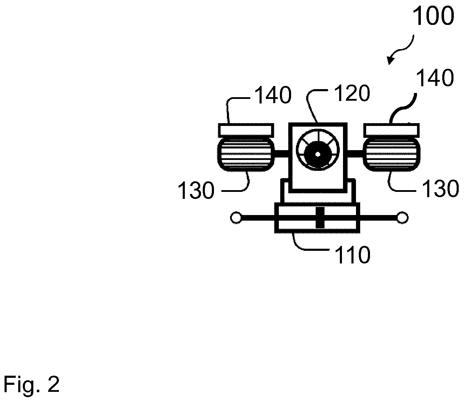

Fig. 2 shows an alternative embodiment, wherein the third module 130 comprising an electric motor as well as an electronic control unit 140 is doubled up, i.e. provided in redundant manner.

In such an embodiment the third module 130 can be used a back-up or for combining the power of the electric motors of both third modules 130.

The electronic control units 140 may be communicatively connected to each other in order allow for example one of the control units 140 to have the function of a primary electronic control unit and the other one to have a secondary function.

Both third modules 130 are connected to the same second module 120.

In the embodiment according to Fig. 2, the third modules 130 are connected on opposing sides of the second module 120 in such a way that both of the electric motors can drive the hydraulic pump in the second module 120.

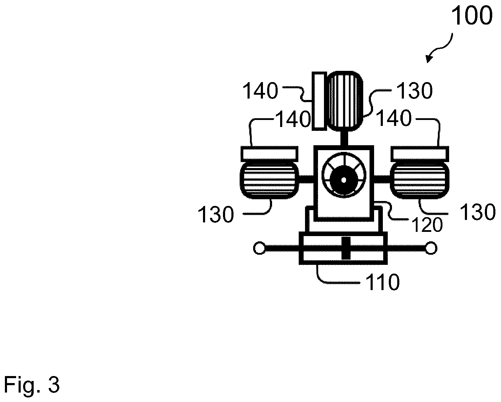

Fig. 3 illustrates an embodiment, where there are not only two but three third modules compared to embodiment as shown in Fig. 2.

In such case, the third modules 130 can be arranged along different sides/side areas of the second module 120.

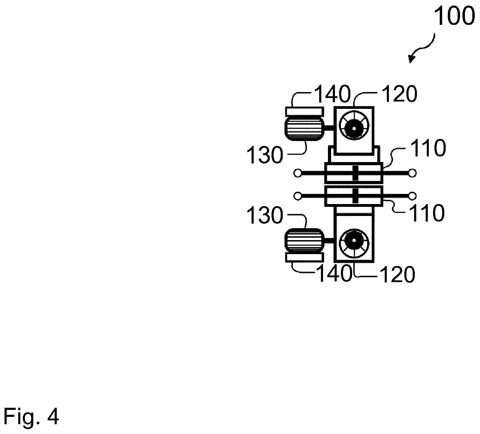

Fig. 4 illustrates an embodiment in which the first module 110, the second module 120 and the third module 130 are doubled.

The first modules 110 are particularly arranged side by side in order to be able to act on the same steered wheel(s), to allow the first modules 110 to be redundant or to act parallel on the same steered wheel(s).

For example, in such case of redundant arrangement of the first modules each comprising a hydraulic cylinder, power of both first modules 110 may also be combinable to provide a scaled power level to actuate and exert a steering impulse on the at least one road wheel.

Each of the first modules 110 is connected to a respective second module 120, which in turn is connected to a respective third module 130 being provided with an electronic control unit 140.

As already mentioned with reference to Fig. 2, the electronic control units 140 may be communicatively connected to each other, in particular to allow for an exchange information about their respective working status and/or the failure or non-failure with each other, in order to determine and/or set up one of the electronic control units 140 as the primary ("master") and the one or more remaining electronic control units as secondaries ("slave(s)").

In summary, by the present invention a steering system being configured in a modular way, in particular a modular Steer-by-Wire system, can be established which is capable of providing scalable redundancy of different component groups and/or scalable power levels in a simple and cost-efficient way by the use of different module configurations, which can be arranged and combined in consideration of the demands and needs of the respective (field of) application.

### REFERENCE SIGNS

- 100: Steering system
- 110: First module
- 120: Second module
- 130: Third module
- 140: Electronic control unit

## Claims

1. Steering system (100), in particular Steer-by-Wire system, for a commercial vehicle comprising at least one road-wheel actuator for exerting a steering impulse on at least one road wheel of the vehicle, the at least one road-wheel actuator being configured as a modular assembly comprising:
- at least one first module (110) comprising a hydraulic actuator;
- at least one second module (120) comprising a hydraulic pump and a valve block;
- at least one third module (130) comprising an electromotor and an electronic control unit;
wherein the road-wheel actuator further comprises at least one additional first module, second module and/or third module.

2. Steering system (100) according to claim 1,
**characterized in that**
the road-wheel actuator comprises two third modules (130) configured to increase the power of the steering system (100).

3. Steering system (100) according to one of the preceding claims,
**characterized in that**
the road-wheel actuator comprises two or three third modules (130), configured to be used in dependence of a prerequisite condition to act as redundant modules or to increase the power of the steering system.

4. Steering system (100) according to one of the preceding claims,
**characterized in that**
the second module (120), in particular the electronic control unit (140), comprises sensors, in order to allow for a steering of the at least one road wheel.

5. Steering system (100) according one of claims 1 to 3,
**characterized in that**
the road-wheel actuator comprises sensors, in order to allow for a steering of the at least one road wheel, wherein the sensors are arranged outside the second module (120).

6. Steering system (100) according to one of claims 1, 4 and 5,
**characterized in that**
the road-wheel actuator comprises only one third module (130), wherein the motor of the third module (130) is provided as a double-wound motor.

7. Steering system (100) according to one of claims 2 or 3,
**characterized in that**
the motor of each third module (130) is provided as a redundant motor, preferably in form of a double-wound motor.

8. Steering system (100) according to one of the preceding claims,
**characterized in that**
each of the electronic control units (140) arranged in a respective third module (130) are communicatively connected in order to communicate and/or cooperate with each other.

9. Steering system (100) according to one of the preceding claims,
**characterized in that**
each of the electronic control units (140) arranged in a respective third module (130) are communicatively connected forming a primary-secondary setup with each other.

10. Steering system (100) according to claim 9,
**characterized in that**
one of the electronic control units (140) is selectable as primary control unit for a predetermined first period, whereby at the end of the first period a different control unit is selectable as primary for a further predetermined second period and/or
wherein the selection of one of the electronic control units (140) as a primary control unit preferably includes a non-failure test whereby
- in case of non-failure of the non-failure test, the electronic control unit is selected as primary, whereby,
- in case of failure of the non-failure test, the electronic control unit is not selected and the non-failure test is performed on a different control unit.

11. Steering system (100) according to claim 10,
**characterized in that**
wherein each of the control unit (140) is configured to check its working status and to provide information about its working status to the other control unit(s) (140).

12. Steering system according to one of the preceding claims,
**characterized in that**
the system further comprising a steering wheel device configured to provide a user input signal to the at least one road-wheel actuator and at least one road wheel configured to be actuated by the at least one road-wheel actuator, in particular according to the user input signal.

13. Road-wheel actuator, in particular a modular road-wheel actuator, for a steering system according to one of the preceding claims, wherein the road-wheel actuator comprises multiple modules of at least one of the first module (110), the second module (120) and/or the third module (130).
